# EUROPEAN PATENT APPLICATION

(11) **EP 1 162 838 A2**
(43) Date of publication of application: **12.12.2001**
(21) Application number: 01304759.2
(22) Date of filing: 30.05.2001
(51) Int. Cl.: H04N 5/765

(54) **Programmed process control system**

(30) Priority: 08.06.2000 JP 2000172182
(71) Applicant: MATSUSHITA ELECTRIC INDUSTRIAL CO., LTD., Kadoma-shi, Osaka 571-8501 (JP)
(72) Inventor: Sakatani, Tomohiko, Ashiya-shi, Hyogo 659-0086 (JP); Egusa, Yo, Kyoto-shi, Kyoto 612-0803 (JP)
(74) Representative: Rackham, Stephen Neil

(57) **Abstract**

The invention provides a programmed process control system which can save power consumption during a standby state for a programmed process, and is particularly suitable for a video-recording system to record BS digital broadcasting. The control system (10, 10b) executes a programmed process which is executed at a predetermined time set in advance. The system includes a controller (20, 35b) for transmitting a command to instruct to execute the programmed process, and a target (35, 20b) for receiving the command to execute the programmed process. The target (35, 20b) comprises a command receiving section (64, 46b) for receiving the command, a program executing section (70, 48) for implement the programmed process according to the command, and a power supply controller (72, 52) for controlling power supply to the command receiving section (64, 46b) according to execution of the programmed process.

## Description

The present invention relates to a system which is capable of setting and executing a programmed process that is to be executed at a predetermined time set in advance, more specifically to a control system which is suitable for a programmed video-recording control system that records programs on digital broadcasting with timer recording.

In recent years, along with the development of digitized video images in the world, the digital BS broadcasting and CS broadcasting have begun in Japan. The digital broadcasting makes it possible to provide multiple channels for programs, and viewers can select desired programs and view and listen to the programs in accordance with their taste. However, in some cases, the broadcasting times of the desired programs are not convenient for the viewers. In such a case, those programs can be programmed to be recorded by using a video recording system containing a tuner and a VTR with a timer recording function.

Here, in recent years, there have been ever increasing demands for reduced power consumption by the users, and almost every apparatus needs to be subjected to a power-consumption reducing process.

However, in the conventional video recording system, since it is not possible to recognize when a command for executing programmed process is sent to the VTR, a command receiver in the VTR needs to be turned on all the time, and it is impossible to cut power consumption in these devices.

The present invention has been devised to solve the above-mentioned problem, and its objective is to provide a programmed process control system which turns off the power supply to most of sections including the command receiver during a standby state for execution of a programmed process, and turns on the power supply only to subminimal required sections, and particularly which is suitable for a programmed video-recording control system for programming to record desired programs on a digital broadcasting.

In the first aspect of the invention, a programmed process control system is provided that executes a programmed process which is to be executed at a predetermined time set in advance.

The system comprises a first apparatus for transmitting outside a command to instruct execution of the programmed process, and a second apparatus for receiving the command to execute the programmed process. The second apparatus comprises a command receiving section for receiving the command, a program executing section for executing the programmed process according to the command, and a power supply controller for controlling power supply to the command receiving section according to execution of the programmed process.

In the system, the power supply controller may control the power supply to the command receiving section such that the power supply is started a first predetermined time before a recording start time of executing the programmed process.

Alternatively, the power supply controller may control the power supply to the command receiving section such that the power supply is cut off after a second predetermined time from an end time of executing the programmed process.

In the system, the first apparatus may output a predetermined data, and the second apparatus may receive the predetermined data and apply a predetermined process to the received data.

Alternatively, the second apparatus may output a predetermined data, and the first apparatus may receive the predetermined data and apply a predetermined process to the received data.

IEEE1394 may be used for an interface between the fist apparatus and the second apparatus.

In the second aspect of the invention, an apparatus is provided that receives a command to instruct execution of a programmed process which is to be executed at a predetermined time set in advance from an external apparatus. The apparatus comprises a command receiving section for receiving the command, a program executing section for executing the programmed process according to the command, and a power supply controller for controlling power supply to the command receiving section according to execution of the programmed process.

According to the invention, the system can be provided which can suppress power consumption during a standby state for the programmed process.

A better understanding of the invention will be obtained by reading the description of the invention below, with reference to the following drawings, in which:
FIG. 1 is a block diagram that shows a structure of a programmed video-recording control system with a timer recording function of the first embodiment in the present invention;
FIG. 2 is an explanatory drawing that shows the states of packets transmitted through a digital interface; and
FIG. 3 is a block diagram that shows a structure of a programmed video-recording control system of the second embodiment in the present invention.

Referring to those Figures, the following description will discuss preferred embodiments of the present invention.

### First Embodiment.

### (Configuration of the programmed video-recording control system)

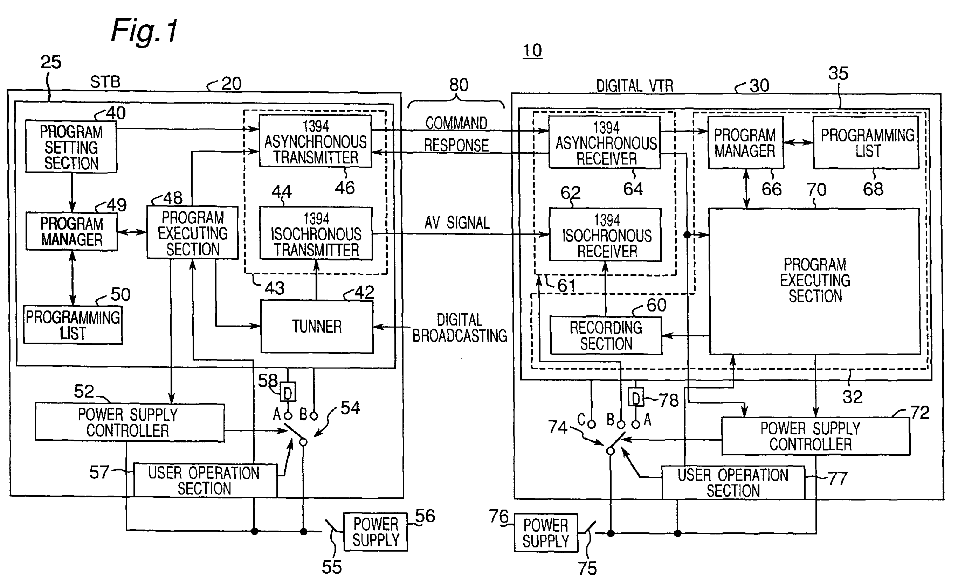

FIG. 1 is a block diagram that shows a configuration of a programmed video-recording control system in accordance with one embodiment of the present invention. The programmed video-recording control system 10 of FIG. 1 comprises a set top box (hereinafter, referred to as "STB") 20 serving as a controller, a digital VTR 30 serving as a target, and an IEEE 1394 (80) serving as a digital interface for connecting these. It should be noted that the controller is a control command transmitting apparatus to transmit outside a command, and the target is a control receiving apparatus to receive the command from the control command transmitting apparatus.

The STB 20 comprises an operation section 25, a switch 54 for switching on and off the power supply to the operation section by connecting to a contact A or a contact B, a power supply controller 52 for controlling the switching of the switch 54, a main switch 55 for switching on and off the power supply to the entire STB 20, a user operation section 57 on which user provides designation to switch the switch 54, a delay circuit 58 which normally allows no current to flow, but when connected, is cut off after several seconds from the connection, and a power supply 56 which supplies power to the STB 20.

The operation section 25 comprises a program setting section 40 for controlling programming process of recording programs for the target, a tuner 42 for receiving digital broad casting, a 1394 interface 43, a program executing section 48 for controlling execution of the program to the target, a programming list 50 in which program information is written, and a program manager 49 for carrying out writing and reading operations on and from the programming list 50. The 1394 interface 43 is provided with an 1394 isochronous transmitter 44 for transmitting commands and an 1394 asynchronous transmitter 46 for transmitting digital AV signals.

Moreover, the digital VTR 30 comprises a main section 35, a switch 74 for switching power supplies by connecting to contact A, B or C, a power supply controller 72 for controlling the switching of the switch 74, a main switch 75 for on/off switching the power supply to the entire digital VTR 30, a power supply 76 for supplying power to the digital VTR 30, a user operation section 77 on which the user provides designation to switch the switch 74, and a delay circuit 78 which normally allows no current to flow, but when connected, is cut after several seconds from the connection. The main section 35 comprises a 1394 interface 61, and a driving section 32 that contains motors and movable members for carrying out mechanical operations. The 1394 interface 61 includes a 1394 isochronous receiver 62 for receiving digital AV signals, and a 1394 asynchronous receiver 64 for receiving commands (for example, 1394 VCR command, 1394 tuner command) . The driving section 32 comprises a recording section 60 for recording digital AV signals on a recording medium, a programming list 68 in which program information is written, a program manager 66 for writing and reading operations on and from the programming list, and a program executing section 70.

Suppose that, in an initial state of the programmed video-recording control system 10, the main switch 55 of the STB 20 is on, the switch 54 is connected to the contact A, the main switch 75 of the digital VTR 30 is on, and the switch 74 is connected to the contact A. In this initial state, power is supplied to the power supply controllers 52 and 72 as well as to the user operation sections 57 and 77, however, no power is supplied to the operation section 25 of the STB 20 and the main section 35 of the digital VTR 30. Thereafter, the user switches the switch 54 to the contact B through the user operation section 57 so that the operation section 25 of the STB 20 is turned on, and also switches the switch 74 to the contact C through the user operation section 77 so that the main section 35 of the digital VTR 30 is turned on.

### (Setting of Video-recording programming)

An explanation will be given of a setting of programming process for a video-recording in the programmed video-recording control system 10 of the present invention.

In the STB 20, the user inputs G code (licensed by Gemstar Japan Co., Ltd.) of a desired program to be programmed and recorded, to a program setting section 40. In this case, G codes of a plurality of programs may be inputted. The program setting section 40 converts the inputted G code into program information to transmit the information to the program manager 49 and the 1394 asynchronous transmitter 46. The above-mentioned program information is information containing a channel of a program to be recorded and recording start/end times and so on, and information which is used for controlling the setting of the video-recording programming of the digital VTR 30 from the STB 20. The program manager 49 writes the program information in the programming list 50. Moreover, the program manager 49 reads the program information from the programming list 50, and transmits the program information to the program executing section 48. The program executing section 48 transmits control commands to the power supply controller 52 together with the program information. The 1394 asynchronous transmitter 46 transmits the program information transmitted from the program setting section 40 and commands which are obtained by adding headers etc. to the control command, to the digital VTR 30 with asynchronous communication through the IEEE 1394 (80). Based upon the control command, the power supply controller 52 switches the switch 54 to the contact A, thereby after a lapse of a predetermined time, for example, after a lapse of several seconds, power supply to the operation section 25 is cut off. Therefore, only the power supply controller 52 is on, and the other devices in the STB 20 (that is, the operation section 25) are off (hereinafter, this state is referred to as "a power saving state").

Here, the power supply to the STB 20 may be turned off by the user. When the user switches the switch 54 to the contact A through the user operation section 57, the commands are sent to the program executing section 48 from the user operation section 57. In response to this command, the program executing section 48 reads out the next program information from the programming list 50 by the program manager 49, and transmits the next program information to the power supply controller 52. A certain period of time (for example, several seconds) is required until the transmission of the next program information to the power supply controller 52 is completed after the switch 54 has been switched to the contact A. However, the delay circuit 58 delays cutting off the power supply to the STB 20 so that the STB 20 is brought to the power saving state after completion of the transmission.

In the digital VTR 30, the 1394 asynchronous receiver 64 takes out the program information from the commands transmitted from the STB 20, and transmits the information to the program manager 66. Upon receipt of the commands, the 1394 asynchronous receiver 64, if the commands are capable of being executed, transmits an accept response to the controller within 100 ms. Moreover, the program manager 66 writes the program information in the programming list 68. Moreover, the program manager 66 reads the program information from the programming list 68, and transmits the program information to the program executing section 70. The program executing section 70 transmits the next program information to the power supply controller 72, and also transmits control commands thereto. Based upon the control commands, the power supply controller 72 switches the switch 74 to the contact A. Therefore, the digital VTR 30 is brought into the power saving state with only the power supply controller 72 being on. Thus, the setting process for the video-recording programming is completed.

Moreover, in the same manner as the STB 20, the switch 74 may be switched to the contact A by the user. When the user switches the switch 74 to the contact A through the user operation section 77, a command is sent from the user operation section 77 to the program executing section 70. In response to this command, the program executing section 70 reads out the next program information from the programming list 68 by the program manager 66, and transmits the next program information to the power supply controller 72. A certain period of time (for example, several seconds) is required until the transmission of the next program information to the power supply controller 72 is completed after the switch 74 has been switched to the contact A. Therefore, the delay circuit 78 delays a shut down of the power supply to the STB 20 so that the STB 20 is brought to the power saving state after completion of the transmission. Here, in the case where the digital VTR 30 receives the programming command including the program information from the STB 30 and can write the received program information in the programming list 68, the digital VTR 30 transmits an access response within 100 ms. The STB 20 receives this response in the 1394 asynchronous transmitter 46. Thus the STB 20 can confirm the fact that the program information is written in the programming list 68 so as to carry out the setting of the video-recording programming.

Here, one example for program information to be written in the programming lists 50 and 68 is given in the following Table. In the programming lists 50 and 68, channels, start times and end times of programs to be programmed and recorded are contained.

**TABLE 1**

| CHANNEL | RECORDING START TIME | RECORDING END TIME |
|---|---|---|
| 10 ch | 2000/4/12 | 2000/4/12 |
| | 7:00 PM | 8:54 PM |
| 2 ch | 2000/4/12 | 2000/4/12 |
| | 9:00 PM | 10:00 PM |

### (Execution of Programmed Video-recording)

Next, an explanation will be given of the execution of programmed video-recording process or timer recorded process in the programmed video-recording control system 10 of the present invention.

Both of the power supply controllers 52 and 72 have built-in clocks, respectively. Based upon the start time of the video-recording programming contained in the program information, the power supply controller 52 switches the switch 54 of the STB 20 to the contact B several minutes before the recording start time, while the power supply controller 72 switches the switch 74 of the digital VTR 30 to the contact B. At this time, in the digital VTR 30, the 1394 asynchronous receiver 64 and the 1394 isochronous receiver 62 are respectively ready for receiving commands and digital AV signals, and the other devices are off. Hereinafter, this state of the digital VTR 30 is referred to as "a program executing standby state". In contrast, in the STB 20, all the devices are in operable states.

Thereafter, the program executing section 48 having a built-in clock transmits a control command from the STB 20 to the digital VTR 30 by asynchronous communication several seconds before the recording start time of the set video-recording programming. If the 1394 asynchronous receiver 62 has received the control command which is operable, the 1394 asynchronous receiver 62 transmits an accept response to the STB 20 within 100 ms from the receipt. Moreover, the 1394 asynchronous receiver 62 transmits a control command to the power supply controller 72, and the power supply controller 72 switches the switch 74 to the contact C, thereby bringing all the devices for executing the programmed video-recording process in the digital VTR 30 into an operable state.

Here, for example, in case that the broadcasting time of a desired program is changed due to an extended broadcasting time of another program, as is often the case with a baseball program, information indicating the change of the programmed video-recording start time is transmitted from the STB 20, and the information indicating the change is transmitted to the power supply controller 72. Transmitting such a new information changes the start time of the programmed video-recording time. Thus, the power supply controller 72 does not switch the switch 74 at the programmed video-recording start time which was set before. Therefore, even when the programmed video-recording start time is changed, no power is supplied to the driving section 32 which has a great power consumption, thereby making it possible to diminish time during which wasteful power is supplied.

Thereafter, at the set programmed recording start time, the program executing section 48 in the STB 20 transmits a control signal to the tuner 42. Based upon the control signal, the tuner 42 selects the channel for the programmed program from digital broadcasting received through the antenna. The digital AV signal of the programmed program selected by the tuner 42 is transmitted to the 1394 isochronous transmitter 44. The 1394 isochronous transmitter 44 transmits the received digital AV signal to the digital VTR 30 by isochronous communication through the IEEE 1394 (80). Moreover, the program executing section 48 transmits a recording start command to the digital VTR 30 with asynchronous communication through the IEEE 1394 (80). It is noted that the digital broadcasting inputted to the tuner 42 is not limited to digital broadcasting received through the antenna, but may be, for example, digital broadcasting transmitted through a cable.

In the digital VTR 30, the 1394 asynchronous receiver 64 receives the recording start command transmitted from the STB 20, and transmits the command to the program executing section 70. Moreover, the 1394 isochronous receiver 62 receives digital AV signals transmitted from the STB 20, and transmits the signal to the recording section 60. At this time, the program executing section 70 transmits the control signal to the recording section 60. The recording section 60 starts recording the programmed program to a video tape. In the same manner as the setting of the video-recording programming, in the case of executing the programmed video-recording process also, upon receipt of the recording start command from the STB 20 and the received command is operable, the digital VTR 30 transmits an accept response within 100 ms from the receipt. The STB 20 receives the response with the 1394 asynchronous transmitter 44, and thus it is possible to confirm the execution of the recording start command.

### (Termination of Programmed Video-recording)

Next, an explanation will be given of termination of the programmed video-recording process by the programmed video-recording control system 10 of the present invention.

When the end time of the programmed video-recording process comes, based upon the program information, the program executing section 48 in the STB 20 transmits a control signal to the tuner 42 to make the tuner 42 to terminate the receiving of the digital broadcasting. Moreover, the program executing section 48 transmits a recording end command to the digital VTR 30 with asynchronous communication through the IEEE 1394 (80).

In the digital VTR 30, the 1394 asynchronous receiver 64 receives the recording end command transmitted from the STB 20, and transmits the command to the program executing section 70. When receiving the recording end command which is operable, the 1394 asynchronous receiver 64 transmits an accept response to the STB 20 within 100 ms from the receipt. Moreover, the program executing section 70 transmits a control signal to the recording section 60 to make the recording section 60 terminate the recording process. Thereafter, the program executing section 70 reads out the next program information from the programming list 68, and transmits the recording end command to the power supply controller 72 together with the next program information. Based upon the recording end command, the power supply controller 72 switches the switch 74 to the contact A, and digital VTR 30 comes into the power saving state.

In the STB 20, the program executing section 48 reads out the next program information from the programming list 50, and transmits a programmed-recording end command to the power supply controller 52 together with the next program information. Based upon this programmed-recording end command, the power supply controller 52 turns the switch 54 off, thereby allowing the STB 20 to enter the power saving state. In the same manner as the programmed-recording start, in the case of the programmed-recording end the STB 20 also receives an accept response from the digital VTR 30, it is possible to confirm the completion of the programmed-recording process of the digital VTR 30.

In FIG. 1, the digital AV signal and the command are illustrated as if they were transmitted from respective IEEEs 1394 (80). However, these drawings are given for convenience of explanation, and in fact, the digital AV signal and the command are transmitted through one IEEE 1394 (80).

### (Asynchronous Communication and Isochronous Communication)

An explanation will be given of the asynchronous communication and isochronous communication that are carried out through the IEEE 1394 (80).

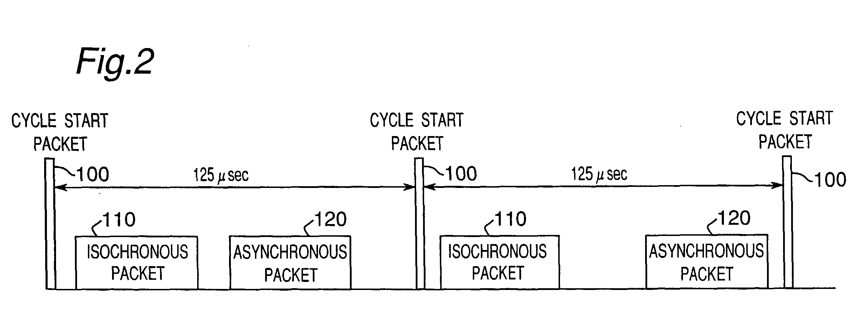

FIG. 2 is an explanatory drawing that explains states of packets that are transmitted through the IEEE 1394. In the isochronous communication, the AV signals and so on are transmitted through isochronous packets 110, while in the asynchronous communication, the program information, control commands and so on are transmitted through asynchronous packets 120. One cycle contains an interval from a cycle start packet 100 to the next cycle start packet 100. The interval between the respective cycle start packets is basically 125 µ sec. 100 µ sec Of 125 µsec is used for isochronous communication, and the rest thereof is used for asynchronous communication. The isochronous packet 110 is always transmitted next to the cycle start packet 100, and the asynchronous packet 120 is transmitted between the isochronous packet 110 and the next cycle start packet 100. In this manner, only one IEEE 1394 (80) can transmit all the AV signals including video signals and audio signals and control commands, and it is not necessary to use independently different interfaces as in the case of analog data transfer.

As described above, in the programmed video-recording control system 10 in the present invention, during a standby state for a programmed process, the digital VTR 30 is controlled to be in the power saving state in which power supply to the sections other than the power supply controller 72 is cut off, a predetermined time before the recording start time. Particularly, the digital VTR 30 is controlled to a program-executing standby state in which the 1394 interface 61b in addition to the sections other than the power supply controller 72 is supplied with power, a predetermined time before recording start time. Thus, it becomes possible to reduce the power consumption during the program standby state. Similarly, it is possible to further reduce the power consumption by controlling the STB 20 to a power saving state a predetermined time before the recording start time in the standby state for the programmed process. Furthermore, the application of IEEE 1394 (80) capable of bi-directional communications to the programmed video-recording control system 10 of the present invention allows the STB 20 to confirm the completion of setting of a video-recording programming or the completion of a programmed recording in the digital VTR 30.

### Second Embodiment.

### (Configuration of Programmed video-recording control system)

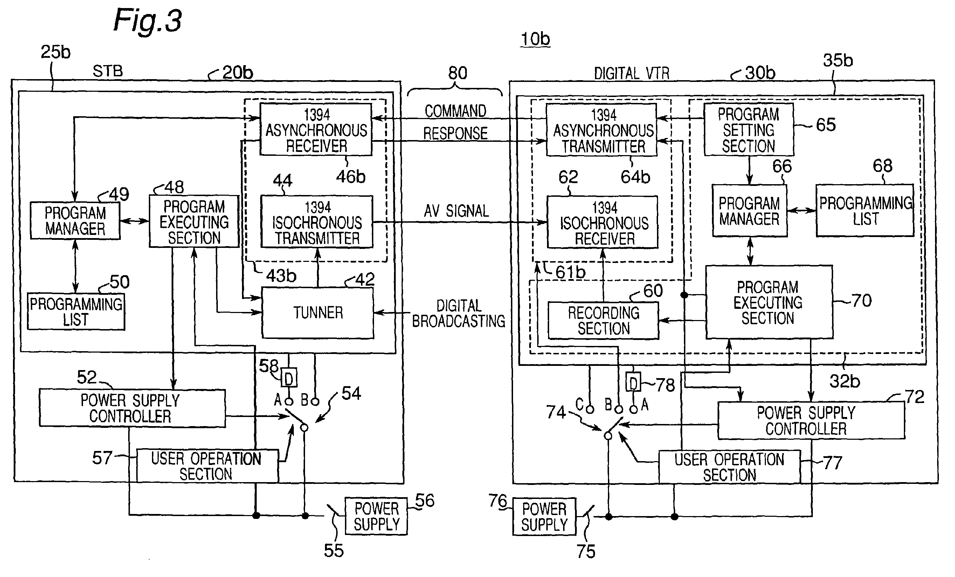

Fig. 3 shows a configuration of a programmed video-recording control system of this embodiment.

The programmed video-recording control system of this embodiment comprises a digital VTR and a STB as same as the first embodiment. In this embodiment contrary to the first embodiment, the digital VTR serves as the controller, and the STB serves as the target.

The STB 20b and the digital VTR 30b of this embodiment have almost the same components as those of the first embodiment, but are different in the followings.

The STB 20b of this embodiment has a 1394 asynchronous receiver 46b in the 1394 interface 43b, but has no program setting section 40.

The digital VTR 30b has a 1394 asynchronous transmitter 64b in the 1394 interface 61b. A driving section 32b of the digital VTR 30b has a program setting section 65 which is connected between the 1394 asynchronous transmitter 64b and the program manager 66 in addition to components of the driving section 32 of the first embodiment.

### (Setting of Video-recording programming)

Setting operation of the programmed video-recording control system 10b of this embodiment is described below. In this embodiment setting of video-recording programming is done on a side of the digital VTR 30b. That is, user makes the setting on the program setting section 65 of the digital VTR 30. Details of the setting of the video-recording programming by the user is the same as described in the first embodiment. The program setting section 65 transmits program information which is provided by the setting to the program manager 66 and the 1394 asynchronous transmitter 64b. The program manager 60 writes the program information to the programming list 68 and further transmits the program information to the program executing section 70. The program executing section 70 transmits the program information and a control command to the power supply controller 72. The power supply controller 72 switches the switch 74 to a contact A according to the control command, thereby cutting off power supply to a main section 35b predetermined time after switching. Accordingly, the digital VTR 30 is in a state (power saving state) in which only the power supply controller 72 is on and the main section 35b is not supplied with power.

It is noted that such a switching for cutting off the power supply to the main section 35b of the digital VTR 30b may be done by user operation. That is, user may switch the switch 74 to the contact A through the user operation section 77. In this time, the user operation section 77 transmits a command to the program executing section 70. The program executing section 70 controls the program manager 66 according to the command such that the next program information is read out from the programming list 68 and the read next program information is transmitted to the power supply controller 72.

The 1394 asynchronous transmitter 64b transmits the program information transmitted from the program setting section 65 and a command which is obtained by adding header and so on to the control command to the STB 20b via IEEE1394 (80).

In the STB 20b, upon receiving the command from the digital VTR 30b, the 1394 asynchronous receiver 46b retrieves the program information from the received command to transmit the retrieved information to the program manager 49. The program manager 49 writes the program information to the programming list 50 and transmits the information to the program executing section 48. The program executing section 48 transmits the next program information and the control command to the power supply controller 52. The power supply controller 52 switches the switch 74 to the contact A according to the control command. Then, only the power supply controller 52 is supplied with power, that is, STB 20b becomes the power saving state. Thus the setting of the video-recording programming is completed.

It is noted that in the STB 20b user may switch the switch 74 to the contact A through the user operation section 77. In this time, the user operation section 77 transmits a command to the program executing section 48 when the switch 74 is switched to the contact A. The program executing section 48 controls the switch 54 according to the command such that only the power supply controller 52 is on.

### (Execution of Programmed Video-recording)

Execution of programmed video-recording process of the system 10b will be described below.

In the digital VTR 30b, the power supply controller 72 switches the switch 74 to the contact B several minutes before the recording start time according to the recording start time included in the program information.

Also in the STB 20b, the power supply controller 52 switches the switch 54 to the contact B several minutes before the recording start time. Thus the 1394 interface 43b is supplied with power. Accordingly, in the STB 20b, the 1394 asynchronous receiver 46b is in a state capable of receiving the command from the digital VTR 30, and the other devices are off. This state of the STB 20b is referred to as "the program-executing standby state". The digital VTR 30b is in a state in which all devices in the digital VTR 30b are executable.

Then the program executing section 70 of the digital VTR 30b transmits a control command to the STB 20b with asynchronous communication several seconds before the recording start time of the video-recording programming setting. When receiving the control command, the 1394 asynchronous receiver 46b of the STB 20b transmits the control command to the program manager 49 and the program executing section 48. The program executing section 48 transmits a control command to the power supply controller 52 so as to switch the switch 54 to the contact C. Upon the switch 54 being switched to the contact C, all devices for programmed recording in the STB 20b become executable.

Thereafter, at the recording start time in the program setting, the program executing section 70 in the digital VTR 30b transmits a command for tuning (referred to as "tuning command") to the STB 20 via the 1394 asynchronous transmitter 64b. In the STB 20 the tuning command is transmitted to the tuner 42 via the 1394 asynchronous receiver 46b. Based upon the control signal, the tuner 42 selects the channel for the recording-programmed program from received digital broadcasting. The digital AV signal of the recording-programmed program selected by the tuner 42 is transmitted to the digital VTR 30b via the 1394 isochronous transmitter 44 with isochronous communication. It is noted that when receives the tuning command which is executable from the digital VTR 30b, the STB 20 transmits an accept response to the digital VTR 30. The digital VTR 30 receives the tuning command and can confirm that the tuning command is executed based on the received tuning command.

When the digital VTR 30 receives this response, the program executing section 70 transmits a control signal to the recording section 60. The recording section 60 starts recording the recording-programmed program to a video tape according to the control signal.

In the above description, the STB 20b receives the tuning command from the digital VTR 30b when video-recording is started, and tunes according to the tuning command. However instead of receiving the tuning command, program information including the tuning command may be received from the digital VTR 30b at the setting of the video-recording programming and the channel may be selected according to the tuning command received at the setting. In that case, the program executing section 48 sends a control signal for tuning to the tuner 42 at the recording start time.

### (Termination of Programmed Video-recording)

An explanation will be given of termination of the programmed video-recording process in the programmed video-recording control system 10b.

At the end time of the programmed video-recording, based upon the program information, the program executing section 70 in the digital VTR 30b transmits a control signal to the STB 20b to terminate reception of the digital broadcasting. The tuner 42 terminates the reception of the digital broadcasting according to the control signal.

In the STB 20b, the program executing section 48 reads the next program information from the programming list 50, and transmits next program information and a programmed-recording end command to the power supply controller 52. Based upon the programmed-recording end command, the power supply controller 52 switches the switch 54 to the contact A. Thus, power supply to the driving section 25b including the 1394 interface 43b is cut off after a predetermined time passes, and thus the STB 20 comes into the power saving state. It is noted that at the end of recording the STB 20b transmits the accept response to the digital VTR 30b.

In the digital VTR 30b, the program executing section 70 controls the recording section 60 to terminate video-recording. Thereafter, the program executing section 70 reads out the next program information from the programming list 68, and transmits the next program information and a command for terminating a recording to the power supply controller 72. The power supply controller 72 switches the switch 74 to connect the contact A, thereby the digital VTR 30 becoming in power saving state.

As described above, in the programmed video-recording control system of this embodiment, the digital VTR 30 serves as the controller, while the STB 20b serves as the target, in which the digital VTR 30b controls the operation on the programmed video-recording of the STB 20b. In the programmed video-recording control system of this embodiment, during the standby state for the programmed process, the STB 20b is controlled to the power saving state in which all sections other than the power supply controller 52 are not supplied with power, until a predetermined time before the recording start time. Further at a predetermined time before the recording start time, the STB 20b is controlled to the program executing standby state in which power is supplied to the 1394 interface 43b for receiving a command as well as the sections other than the power supply controller 52. Thus power consumption during the standby state for the programmed process can be reduced much.

### (Other Variations)

In the above description, for the controller and the target, the STB(Set Top Box) as a broadcasting receiver and the digital VTR as a recorder are used. However, in addition to those apparatuses, for example, a television incorporating a STB may be used as the broadcasting receiver, and a hard disc recorder or a DVD recorder which stores data may be used as the recorder. In case that a broadcasting received by the broadcasting receiver is a data broadcasting, data described in BML (Broadcast Markup Language) may be transmitted from the receiver to the recorder, and then the recorder may store the data transmitted from the receiver to a recording medium such as a hard disc or a DVD.

Further, video-recording is picked up in the above description as an example of the programmed process. The programmed process however is not limited to this, but includes the other process.

A combination of the controller and the target is not limited to a combination of the broadcasting receiver and the recorder, but may be another combination of electric apparatuses in which the controller transmits the program information and power supply to a section for receiving a command in the target is controlled.

## Claims

1. A programmed process control system (10, 10b) which executes a programmed process which is to be executed at a predetermined time set in advance, **characterized by**
a first apparatus (20, 35b) for transmitting outside a command to instruct execution of the programmed process, and
a second apparatus (35, 20b) for receiving the command to execute the programmed process, wherein the second apparatus (35, 20b) comprises:
a command receiving section (64, 46b) for receiving the command;
a program executing section (70, 48) for executing the programmed process according to the command; and
a power supply controller (72, 52) for controlling power supply to the command receiving section (64, 46b) according to execution of the programmed process.

2. The system according to claim 1, wherein the power supply controller (72, 52) controls the power supply to the command receiving section (64, 46b) such that the power supply is started a first predetermined time before a recording start time of executing the programmed process.

3. The system according to claim 1, wherein the power supply controller (72, 52) controls the power supply to the command receiving section (64, 46b) such that the power supply is cut off after a second predetermined time from an end time of executing the programmed process.

4. The system according to claim 1, wherein the first apparatus (20) outputs a predetermined data, and the second apparatus (30) receives the predetermined data and applies a predetermined process to the received data.

5. The system according to claim 1, wherein the second apparatus (20b) outputs a predetermined data, and the first apparatus (30b) receives the predetermined data and applies a predetermined process to the received data.

6. The system according to claim 1, wherein IEEE1394 is used for interface (80) between the fist apparatus (20 or 35b) and the second apparatus (35 or 20b).

7. An apparatus (35, 20b) for receiving a command to instruct execution of a programmed process which is to be executed at a predetermined time set in advance from an external apparatus, **characterized by:**
a command receiving section (64, 46b) for receiving the command;
a program executing section (70, 48) for executing the programmed process according to the command; and
a power supply controller (72, 52) for controlling power supply to the command receiving section according to execution of the programmed process.

8. The apparatus according to claim 7, wherein the power supply controller (72, 52) controls the power supply to the command receiving section (64, 46b) such that the power supply is started a first predetermined time before a recording start time of executing the programmed process.

9. The apparatus according to claim 7, wherein the power supply controller (72, 52) controls the power supply to the command receiving section (64, 46b) such that the power supply is cut off after a second predetermined time from an end time of executing the programmed process.
